# EUROPÄISCHE PATENTANMELDUNG

(11) **EP 3 916 503 A1**
(43) Veröffentlichungstag der Anmeldung: **01.12.2021**
(21) Anmeldenummer: 20176511.2
(22) Anmeldetag: 26.05.2020
(51) Int. Cl.: G05B 23/02, G06N 3/08

(54) **VERFAHREN ZUR ÜBERWACHUNG VON BETRIEBSPARAMETERN**

(71) Anmelder: Siemens Aktiengesellschaft, 80333 München (DE)
(72) Erfinder: Bierweiler, Thomas, 76131 Karlsruhe (DE); Labisch, Daniel, 76149 Karlsruhe (DE)

(57) **Zusammenfassung**

Um eine Überwachung von Betriebsparametern (L,T,P) zu verbessern wird vorgeschlagen Überwachungsklassen (UK1, UK2) einzuführen,
- dabei wird eine erste Überwachungsklasse (UK1) durch die Überwachung einer Hochfahr-Phase (HP) mit einer selbstorganisierenden Karte (SOM2) gebildet
- und eine zweite Überwachungsklasse (UK2) wird durch die Überwachung einer Normalbetriebs-Phase (NP) mit einer weiteren selbstorganisierenden Karte (SOM1) gebildet,
wobei die Überwachungsklassen (UK1, UK2) aktiviert und deaktiviert werden, wobei weiterhin
- durch eine Programmanweisung (PA) des Programms (P), welche den Beginn der Hochfahr-Phase (HP) kennzeichnet, die erste Überwachungsklasse (UK1) aktiviert und nach Ablauf der Zeitspanne der Hochfahrdauer (H_{T}) wieder deaktiviert wird, und es wird für die sich anschließende Normalbetriebs-Phase (NP) die zweite Überwachungsklasse (UK2) aktiviert.

## Beschreibung

Die Erfindung betrifft ein Verfahren zur Überwachung von Betriebsparametern einer mittels eines Programms programmgesteuerten industriellen Anlage zur Ausführung eines kontinuierlichen Prozesses, wobei die Anlage in einer Normalbetriebs-Phase betrieben wird, wobei in der Normalbetriebs-Phase zumindest ein einen ordnungsgemäßen Betriebszustand der Anlage charakterisierender Parameter mittels einer ersten selbstorganisierenden Karte überwacht wird, wobei der zumindest eine Parameter in einer Lernphase der ersten selbstorganisierenden Karte, als Eingangsgrößenreiz zugeführt wird, wobei die erste selbstorganisierende Karte zur Speicherung von erlernten Informationen mehrere Knoten aufweist, in einem Knoten wird dann zum einen ein Zeitpunkt der Normalbetriebs-Phase und zum anderen ein erlernter Wert des Parameters abgespeichert, ein Toleranzbereich für den Parameter wird für jeden Knoten bestimmt, und für eine aktuelle Überwachung wird der Parameter zyklisch erfasst, der aktuell erfasste Parameter wird hinsichtlich seines Zeitpunktes und seines Wertes mit den Knoten der ersten selbstorganisierenden Karte verglichen und mittels eines Abstandsmaßes wird geprüft, ob der aktuell ermittelte Wert innerhalb des Toleranzbereiches des jeweiligen korrespondierenden Knoten liegt, und für den Fall, dass der Wert nicht in den Toleranzbereich liegt, wird eine Meldung generiert.

In der EP 3 591 482 A1 wird eine Diagnoseeinrichtung zur Überwachung des Betriebes einer technischen Anlage vorgestellt. Nachteilig an dem dort vorgestellten Verfahren ist es, dass nach einem Anfahrvorgang oder bei einem Wechsel des Arbeitspunktes Schwankungen bei diesen Parametern vorliegen können, welche eventuell zu Fehlerkennungen der Überwachung führen können und aufgrund der Fehlerkennung die Anlage unnötiger Weise eine Störung signalisiert.

Die Aufgabe wird mit den Merkmalen des Anspruch 1 gelöst.

Als Vorteil des Verfahrens wird abgesehen, dass kein zusätzlicher Aufwand zur Erkennung stationärer Zustände benötigt wird, da dasselbe Verfahren (Selbstorganisierende Karten) zur Stationarität-Erkennung genutzt werden kann, das ohnehin für die Anomalie-Erkennung verwendet wird, die Kombination der beiden Anwendungen Anomalie-Erkennung und Stationarität-Erkennung vereinfacht die Auswertung.

Demnach wird ein Erkennungsschritt durchgeführt, in welchem die Anomalie-Erkennung vorübergehend deaktiviert wird und die erste selbstorganisierende Karte (SOM1) für eine Stationarität-Erkennung der Normalbetriebs-Phase (NP) genutzt wird, dabei wird eine Hochfahrdauer der Anlage in einer Hochfahr-Phase ermittelt, wobei die Hochfahrdauer wie folgt ermittelt wird, auf Basis der ersten selbstorganisierenden Karte wird die erste selbstorganisierende Karte (SOM1) hinsichtlich der Treffer in ihren Knoten ausgewertet, und wenn die aktuell erfassten Parameter andere Knoten anregen als es in der Normalbetriebs-Phase der Fall ist, wird ein Zähler gestartet und wenn der aktuell erfasste Parameter wieder die erlernten Knoten anregen, wird der Zähler (Z) gestoppt.

Weiterhin wird ein zusätzlicher Lernschritt eingeführt, der Parameter wird in einer Hochfahr-Lernphase einer zweiten selbstorganisierenden Karte zum Einlernen zugeführt, es werden Überwachungsklassen eingeführt, dabei wird eine erste Überwachungsklasse durch die Überwachung der Hochfahr-Phase mit der zweiten selbstorganisierten Karte gebildet und eine zweite Überwachungsklasse wird durch die Überwachung der Normalbetriebs-Phase mit der ersten selbstorganisierenden Karte gebildet, wobei die Überwachungsklassen aktiviert und deaktiviert werden, wobei weiterhin durch eine Programmanweisung des Programms, welche den Beginn der Hochfahr-Phase kennzeichnet, die erste Überwachungsklasse aktiviert wird, und nach Ablauf der Zeitspanne der Hochfahrdauer wieder deaktiviert wird, und es wird für die sich anschließende Normalbetriebs-Phase die zweite Überwachungsklasse aktiviert.

So kann man mit Vorteil erreichen, dass bei der Überwachung eine Anomalie-Erkennung zu Beginn des Prozesses eventuelle Schwankungen in Prozessparametern zulässt um den weiteren Verlauf, nämlich in einem Normalbetrieb (eingeschwungener Zustand) Schwankungen in den Prozessparametern dennoch wieder als Anomalie erkannt werden.

In einer Normalbetriebs-Phase oder in einem kontinuierlichen Betrieb einer Anlage, liegt demnach ein eingeschwungener oder stationärer Zustand vor, welcher mit einer datenbasierten Analyse in der Lernphase überwacht wird. Ist aber ein kontinuierlicher Betrieb noch nicht erreicht, wird dann erfindungsgemäß datenbasiert anders eingelernt und ausgewertet als in dem eingeschwungenen Zustand. Dieser zusätzliche Erkennungsschritt, beispielsweise das Erkennen einer Hochfahr-Phase, wird basierend auf den Trainingsdaten in der Normalbetriebs-Phase dadurch erkannt, dass alle Messwerte im kontinuierlichen Betrieb, nämlich in der Normalbetriebs-Phase, in einer selbst organisierenden Karte eingelernt wurden.

Eventuell auftretende Schwankungen in einem zeitlichen Verlauf eines Parameters können daher beim Hochfahren von der Normalbetriebs-Phase unterschieden werden.

In einer weiteren Ausgestaltung des Verfahrens ist es von Vorteil, wenn ein Arbeitspunktwechsel wie folgt ermittelt wird, es wird ein einen Arbeitspunkt charakterisierender Sollwert abgefragt, mit dem Sollwert wird aus einer Kennlinie der zugehörige Arbeitspunkt ermittelt, sollte der ermittelte Arbeitspunkt von den derzeitig eingestellten Arbeitspunkt abweichen, so liegt ein Arbeitspunktwechsel vor, für eine sich daraus ergebende Arbeitspunktwechsel-Phase, wird eine Wechseldauer wie folgt ermittelt, auf Basis der ersten selbstorganisierenden Karte wird für den aktuell erfassten Parameter geprüft, ob er außerhalb des Toleranzbereiches liegt, ist dies der Fall, wird ein Zähler gestartet, und wenn der aktuell erfasste Parameter wieder im Toleranzbereich liegt, wird der Zähler gestoppt, weiterhin wird ein weiterer zusätzlicher Lernschritt eingeführt, der Parameter wird in einer Arbeitspunktwechsel-Lernphase einer dritten selbstorganisierenden Karte zum Einlernen zugeführt, und es wird eine dritte Überwachungsklasse durch die Überwachung der Arbeitspunktwechsel-Phase mit der dritten selbstorganisierenden Karte gebildet, es wird anhand des geänderten Sollwertes der Arbeitspunktwechsel erkannt und durch eine Programmanweisung, wird dann die dritte Überwachungsklasse aktiviert und nach Ablauf der Zeitspanne der Wechseldauer wieder deaktiviert und es wird für die sich anschließende Normalbetriebs-Phase wieder die zweite Überwachungsklasse aktiviert.

Bei derartigen kontinuierlichen Prozessen ist es von Vorteil, wenn das Programm als ein Schrittkettenprogramm ausgeführt wird und der Beginn einer Normalbetriebs-Phase durch einen das Ende der Hochfahr-Phase kennzeichnenden Schritt eingeleitet wird.

Vorteilhafter Weise können Schwankungen, wie sie sich durch das Einleiten der Arbeitspunktwechsel-Phase oder der Hochfahr-Phase im zeitlichen Verlauf des Parameters ergeben, weiterhin dadurch festgestellt werden, dass die erste selbstorganisierende Karte hinsichtlich der Treffer in ihren Knoten ausgewertet wird, in dem festgestellt wird, dass die aktuell erfassten Parameter andere Knoten anregen, als es in der Normalbetriebs-Phase der Fall ist.

Bei einer Klassifizierung eines Gutzustandes einer Anlage in einen kontinuierlichen Betrieb besteht eine technische Schwierigkeit darin, dass nach einem Anfahrvorgang und bei Wechsel eines Arbeitspunktes Prozessschwankungen vorliegen, die im weiteren kontinuierlichen Betrieb unerwünscht sind. Erfindungsgemäß kann nun eine datenbasierte Anomalieerkennung durchgeführt werden, welche die anfänglichen Prozessschwankungen in den Parameterwerten von einem anschließenden Normalbetrieb bzw. stationären Betriebszustand unterscheiden können.

Die Zeichnung zeigt ein Ausführungsbeispiel der Erfindung. Es zeigen:
- FIG 1: eine prozesstechnische Anlage,
- FIG 2: einen Aufbau einer selbstorganisierenden Karte,
- FIG 3: ein Beispiel von über die Zeit t aufgenommen Signalen,
- FIG 4: ein Beispiel für ausgewertete Symptome,
- FIG 5: ein beispielhafter Signalverlauf von Parametern mit Erkennungen nach dem Stand der Technik,
- FIG 6: der beispielhafte Signalverlauf mit einer Verbesserung gemäß der Erfindung,
- FIG 7: ein schematisches Phasendiagramm zur Darstellung der einzelnen Prozess-Phasen,
- FIG 8: ein Automatisierungsgerät und
- FIG 9: eine Veranschaulichung einer selbstorganisierenden Karte.

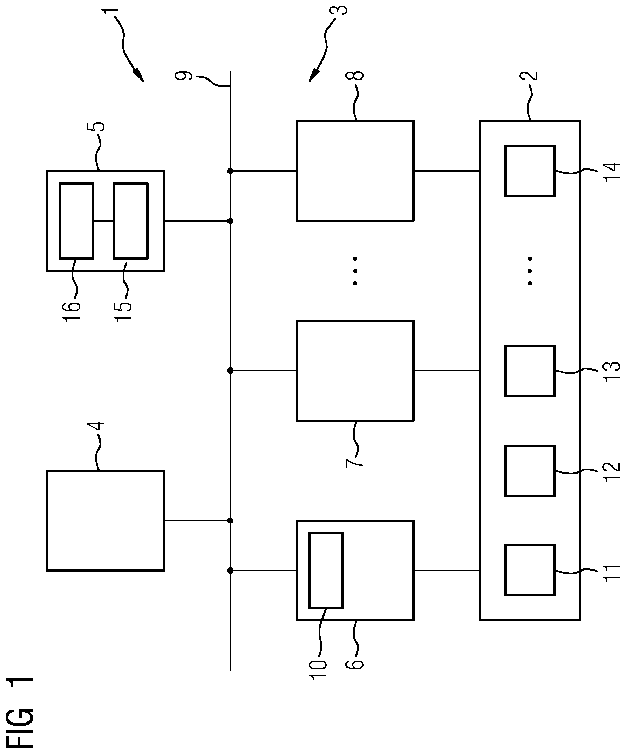

FIG 1 zeigt in vereinfachter schematischer Darstellung als Beispiel eine prozesstechnische Anlage 1, in der ein Prozess 2 mittels eines Automatisierungssystems 3 gesteuert wird. Das Automatisierungssystem 3 enthält ein Planungs- und Engineering-Werkzeug 4, ein Bedien- und Beobachtungsgerät 5 und eine Vielzahl von Automatisierungsgeräten 6,7,8, die über ein Bussystem 9 zur Datenkommunikation miteinander verbunden sind. Die Automatisierungsgeräte 6,7,8 steuern den technischen Prozess 2 nach Maßgabe von Automatisierungsprogrammen, von welchen beispielhaft in FIG 1 ein Automatisierungsprogramm 10 eingezeichnet ist. Das Automatisierungsprogramm 10 kann mehrere Funktionsbausteine umfassen oder als ein Schrittkettenprogramm aufgebaut sein. Zur Steuerung des Prozesses 2 werden vielfältige Feldgeräte 11,12,13,14 zur Prozessinstrumentierung eingesetzt. Messumformer dienen zur Erfassung von Prozessvariablen, wie beispielsweise Temperatur T, Heizleistung P, Füllstand L. Durch Stellglieder kann der Prozessablauf in Abhängigkeit von erfassten Prozessvariablen, beispielsweise durch Vorgaben des Automatisierungsprogramms 10, entsprechend beeinflusst werden. Als Beispiel für Stellglieder seien ein Regelventil, eine Heizung oder eine Pumpe genannt. Zur Überwachung des Betriebs der Anlage 1 wird eine Vielzahl von Datensätzen, die für den Betrieb der Anlage kennzeichnend sind, erfasst und in einen Datenspeicher 15 abgespeichert. Mittels einer Auswerteeinrichtung 16 werden die Datensätze, die Ausführungszeiten einzelner Schritte von Schrittketten enthalten, ausgewertet, um eine Diagnoseaussage zu bestimmen und einem Bediener anzuzeigen, damit eventuell geeignete Maßnahmen zur Fehlerbehandlung getroffen werden können. In der Anlage 1 werden technische Abläufe durch Schrittketten, die auch als Ablaufketten bezeichnet werden können, gesteuert. Eine Schrittkette stellt eine Ablauffolge von Verarbeitungs- oder Produktionsschritten dar, die beispielsweise in einem Automatisierungsprogramm hinterlegt ist. Die Werte von Prozessvariablen bei der Ausführung der einzelnen Schritte, können sowohl produktionsbedingt als auch durch fehlerbedingte Schwankungen Abweichungen unterliegen. Die Überwachung der Schritte ist daher hilfreich zur Erkennung von Abweichungen und Fehlerfällen. Zur Überwachung des Betriebs der Anlage 1 wird eine Vielzahl von Datensätzen, die für den Betrieb der Anlage 1 kennzeichnend sind, erfasst und erlernt und in einem Datenspeicher 15 abgespeichert, wobei in Lern-Phasen der Parameter oder die Parameter einer ersten selbstorganisierenden Karte SOM1 als Eingangsgrößenreiz zugeführt wird, wobei die erste selbstorganisierende Karte SOM1 zur Speicherung von erlernten Informationen mehrere Knoten ID1,...,ID6 aufweist, in einem Knoten ID1,...,ID6 wird dann zum einen ein Zeitpunkt tᵢ der Normalbetriebs-Phase und zum anderen ein erlernter Wert xᵢ des Parameters OK abgespeichert.

Ein Verfahren zur Überwachung der Betriebsparameter L,T,P wird dann mittels eines gesonderten Programms P entweder in einen Bedien- und Beobachtungsgerät 5 oder in einem der Automatisierungsgeräte 6,7,8 durchgeführt.

Wenn die Anlage 1 in einer Normalbetriebs-Phase NP betrieben wird, wobei in der Normalbetriebs-Phase NP zumindest ein einen ordnungsgemäßen Betriebszustand der Anlage 1 charakterisierender Parameter OK mittels einer ersten selbstorganisierenden Karte SOM1 überwacht wird, wird der zumindest eine Parameter OK in einer Lern-Phase LP der ersten selbstorganisierenden Karte SOM1 als Eingangsgrößenreiz zugeführt.

Zur Überwachung wird der aktuell erfasste Parameter OK hinsichtlich seines Zeitpunktes tᵢ und seines Wertes xᵢ mit den Knoten ID1,...,ID6 der ersten selbstorganisierenden Karte SOM1 verglichen und mittels eines Abstandsmaßes wird geprüft, ob der aktuell ermittelte Wert innerhalb des Toleranzbereiches des jeweiligen korrespondierenden Knotens ID1,...,ID6 liegt, und für den Fall, dass der Wert nicht in den Toleranzbereich liegt, wird eine Meldung M generiert.

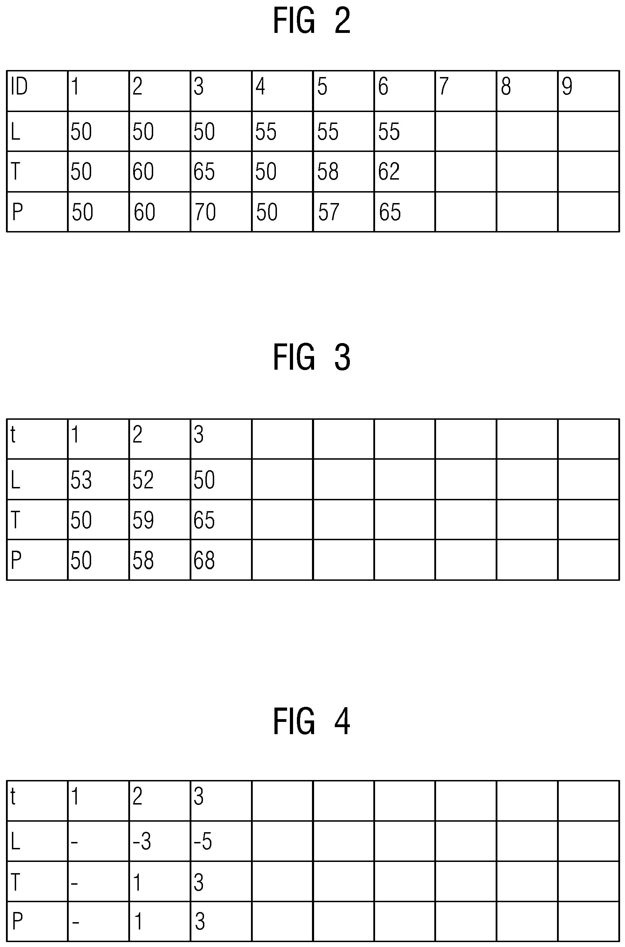

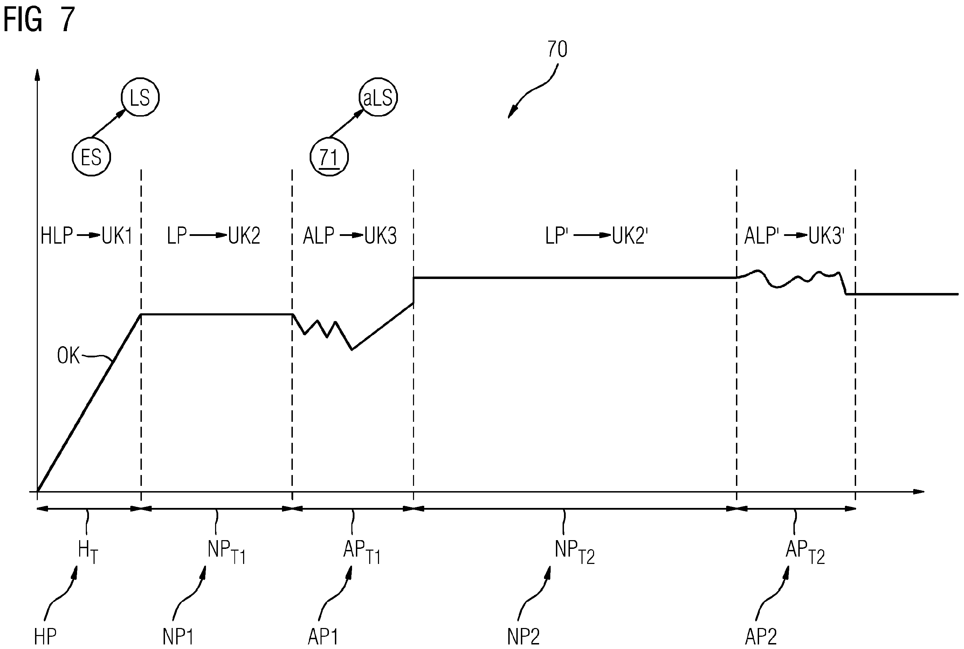

Um nun aber auch Schwankungen zu erkennen, welche nicht unbedingt einen Fehler melden sollen, sondern prozesstechnisch dadurch bedingt sind, dass die Anlage hochgefahren wird, wird zusätzlich ein Erkennungsschritt ES durchgeführt (siehe FIG 7). In diesen zusätzlichen Erkennungsschritt ES wird eine Hochfahrdauer H_{T} der Anlage 1 in einer Hochfahr-Phase HP ermittelt, wobei die Hochfahrdauer H_{T} wie folgt ermittelt wird, auf Basis der ersten selbstorganisierenden Karte SOM1 wird für den aktuell erfassten Parameter OK geprüft, ob er außerhalb des Toleranzbereiches liegt, ist dies der Fall, wird ein Zähler Z gestartet und wenn der aktuell erfasste Parameter OK wieder im Toleranzbereich liegt, wird der Zähler Z gestoppt, weiterhin wird ein zusätzlicher Lernschritt LS eingeführt, der Parameter OK wird in einer Hochfahr-Lernphase HLP, einer zweiten selbstorganisierenden Karte SOM2 zum Anlernen zugeführt, danach werden Überwachungsklassen UK1,UK2 eingeführt, dabei wird eine erste Überwachungsklasse UK1 durch die Überwachung der Hochfahr-Phase HP mit der zweiten selbstorganisierenden Karte SOM2 gebildet und eine zweite Überwachungsklasse UK2 wird durch die Überwachung der Normalbetriebs-Phase NP mit der ersten selbstorganisierenden Karte SOM1 gebildet, wobei die Überwachungsklassen UK1,UK2 aktiviert und deaktiviert werden, wobei weiterhin durch eine Programmanweisung PA des Programms P welche den Beginn der Hochfahr-Phase HP kennzeichnet, die erste Überwachungsklasse UK1 aktiviert wird und nach Ablauf der Zeitspanne der Hochfahrdauer H_{T} wieder deaktiviert wird, und es wird für die sich anschließenden Normalbetriebs-Phase NP die zweite Überwachungsklasse UK2 aktiviert.
Gemäß FIG 2 wird beispielhaft der Aufbau einer selbstorganisierenden Karte SOM1 gezeigt. Die Neuronen werden durch Knoten ID1,ID2,ID3,ID4,ID5,ID6 gebildet. Zeilenweise befindet sich ein Füllstand L, eine Temperatur T und eine Heizleistung P in der Karte SOM1, wobei alle Größen dimensionslos auf dem Wertebereich 0,...,100 normiert sind.

In der Lernphase wurden Siegerneuronen-Verläufe erkannt und diese entsprechend den Knoten ID1,ID2,ID3 und ID4,ID5,ID6 zugeordnet, für die Ausweitung haben diese eine Gutnachbarschaft und besitzen alle vereinfacht den Radius 0 und erhalten damit nur das jeweilige Neuron selbst. Ein maximaler Quantisierungsfehler aller Neuronen sei 3.

Gemäß FIG 3 werden die aktuell ermittelten Signale der Betriebsparameter L,T,P aufgezeigt.

Für t = 1 ist Neuron 4 (ID4) das Siegerneuron mit einen Quantisierungsfehler von 2 und der Siegerneuronen-Verlauf 4,5,6 wird ausgewählt. Für t = 2 erfolgt der Vergleich mit Neuron 5, dem nächsten Element des Siegerneuronen-Verlaufs. Der Quantisierungsfehler beträgt 3,3 und eine Anomalie wird erkannt. Im nächsten Zeitschritt wird mit Neuronen 6 verglichen und der Quantisierungsfehler von 6,6 bestätigt die Anomalie.

Mit der FIG 4 werden daraus abgeleitete Symptome mit den dargestellten Vektoren bereitgestellt.

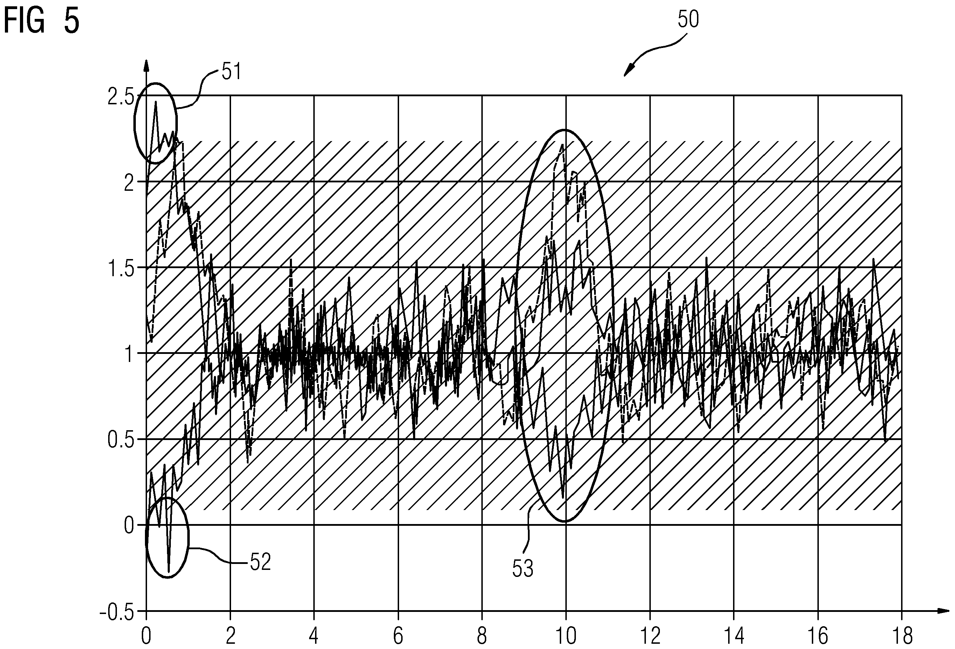

Die FIG 5 zeigt einen Signalverlauf einer nach dem Stand der Technik bekannten Überwachung. Bei der nach dem Stand der Technik bekannten Überwachung ist es von Nachteil, dass z.B. sich bei dem Signalverlauf von Betriebsparametern 50, eine erste Fehlerkennung 51 und eine zweite Fehlerkennung 52 ergeben können, weil sie beispielsweise bei einer Hochlauf-Phase außerhalb des zu überwachenden Parameterraums für eine Normalbetriebs-Phase sind. Ist der Überwachungsbereich für die Normbetriebs-Phase zu großzügig ausgelegt, so können sich auch in einem Nichterkennungsbereich 53 Fehler, beispielsweise aufgrund eines Arbeitspunktwechsels einschleichen, welche nicht erkannt werden.

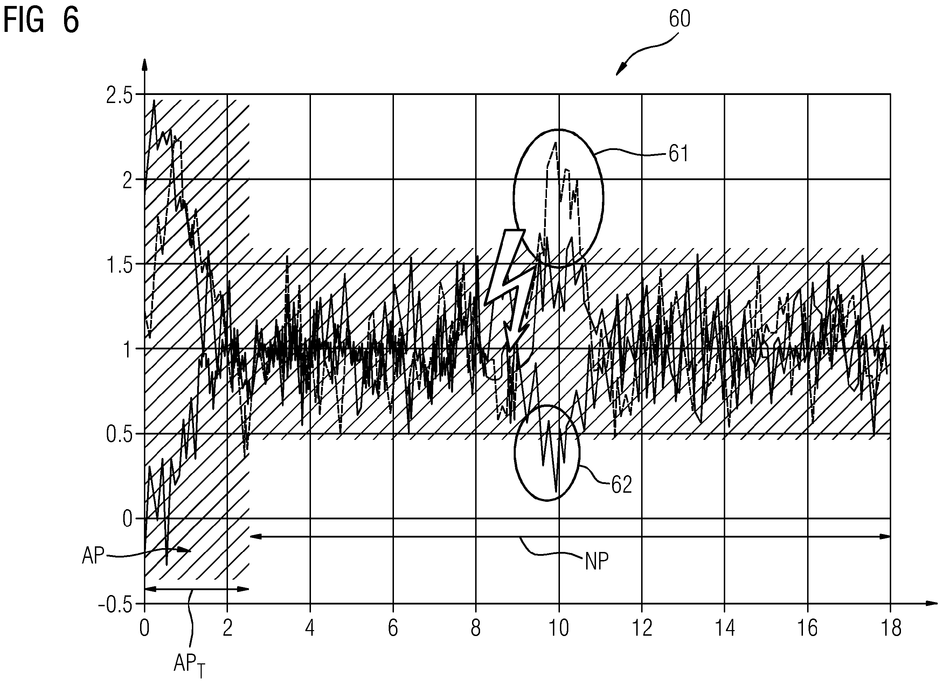

Die FIG 6 zeigt einen Signalverlauf von Betriebsparametern 60 gemäß der Erfindung auf. Hier wird für die Überwachung während der Normalbetriebs-Phase NP ein schmalbandiger Überwachungsbereich gewählt, dementsprechend können eine erste Abweichung 61 und eine zweite Abweichung 62 im Gegensatz zu der Überwachung nach dem Stand der Technik sicher erkannt werden und die gemäß FIG 5 erkannten Fehlerkennungen 51,52 werden mit dem erfindungsgemäßen Verfahren beim Arbeitspunktwechsel nicht erkannt, weil hier der Toleranzbereich noch großzügiger ausgelegt ist.

Die FIG 7 zeigt die einzelnen Phasen der Anlage 1 demnach eine Hochfahr-Phase HP, eine erste Normalbetriebs-Phase NP1, eine erste Arbeitspunktwechsel-Phase AP1, eine zweite Normalbetriebs-Phase LP2 und eine zweite Arbeitspunktwechsel-Phase AP2. Als Signalverlauf ist der einen ordnungsgemäßen Betriebszustand der Anlage 1 charakterisierende Parameter OK dargestellt. Die Hochlauf-Phase HP dauert eine Hochfahrdauer H_{T} während dieser Dauer wird eine Hochlauflern-Phase HLP durchgeführt, welche dann mit Hilfe der zweiten selbstorganisierenden Karte SOM2 eine erste Überwachungsklasse UK1 bildet. In sich der anschließenden Normalbetriebs-Phase, nämlich der ersten Normalbetriebs-Phase NP1 mit einer Normalbetriebs-Phasenzeitdauer NP_{T1} wird ebenfalls in einer Lernphase LP mit Hilfe der ersten selbstorganisierenden Karte SOM1 die zweite Überwachungsklasse UK2 gebildet.

Sollte in einem Normalbetrieb sich ein Arbeitspunktwechsel ergeben, so wird gemäß FIG 7 in einer ersten Arbeitspunktwechsel-Phase AP1 mit Hilfe einer Arbeitspunktwechsel-Lern-Phase ALP eine dritte Überwachungsklasse UK3 gebildet, in dem die erlernten Parameter in einer dritten selbstorganisierenden Karte SOM3 erfasst werden. Eine Arbeitspunktwechsel-Ermittlung 71 gestaltet sich wie folgt: Der Arbeitspunktwechsel wird dadurch erkannt, dass ein einen Arbeitspunkt charakterisierender Sollwert SW abgefragt wird, mit dem Sollwert SW wird aus einer Kennlinie der zugehörige Arbeitspunkt ermittelt, sollte der ermittelte Arbeitspunkt von dem derzeitig eingestellten Arbeitspunkt abweichen, so liegt ein Arbeitspunktwechsel vor, für eine sich daraus ergebende Arbeitspunktwechsel-Phase AP1, nämlich hier die erste Arbeitspunktwechsel-Phase AP1, wird eine erste Wechseldauer AP_{T1} wie folgt ermittelt, auf Basis der ersten selbstorganisierenden Karte SOM1 wird für den aktuell erfassten Parameter OK geprüft, ob er außerhalb des Toleranzbereiches liegt, ist dies der Fall, wird ein Zähler Z gestartet und wenn der aktuell erfasste Parameter OK wieder im Toleranzbereich liegt, wird der Zähler Z gestoppt, weiterhin wird ein zusätzlicher Lernschritt aLS eingeführt, wobei der Parameter OK in einer dritten Arbeitspunktwechsel-Lernphase ALP einer dritten selbstorganisierenden Karte SOM3 zum Einlernen zugeführt wird. Daraus wird eine dritte Überwachungsklasse UK3 gebildet. Demnach wird beim kontinuierlichen Überwachen ein Arbeitspunktwechsel durch einen geänderten Sollwert SW erkannt und durch eine Programmanweisung, wird dann die dritte Überwachungsklasse UK3 aktiviert und nach Ablauf der Zeitspanne der Wechseldauer AP_{T1} wieder deaktiviert und es wird für die sich anschließende Normalbetriebs-Phase NP2 die zweite Überwachungsklasse UK2' aktiviert.

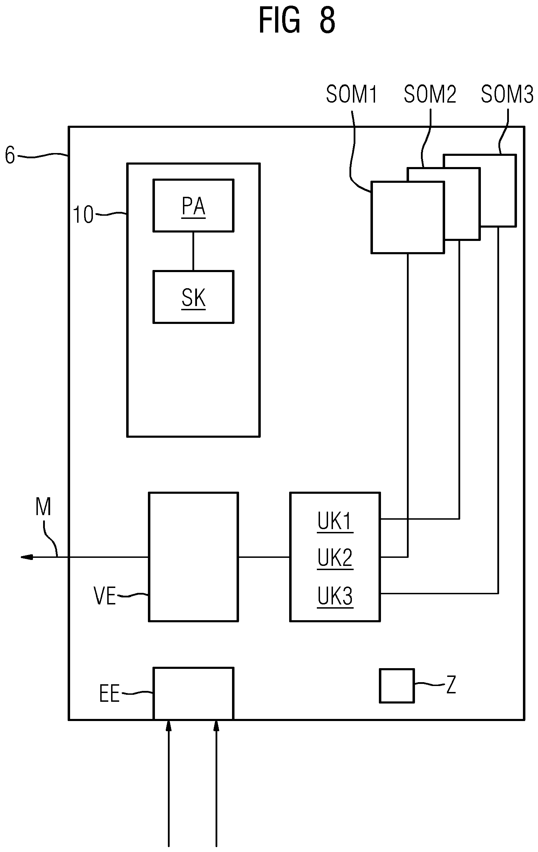

Die FIG 8 zeigt in detaillierter Ausführung 1 der Automatisierungsgeräte 6,7,8, nämlich in diesem Fall ein Automatisierungsgerät 6, mit einem Programm 10 in dem Programmanweisungen PA in Form von Schnittketten SK ausgeführt werden. Das Automatisierungsgerät 6 weist eine erste selbstorganisierende Karte SOM1, eine zweite selbstorganisierende Karte SOM2 und eine dritte selbstorganisierende Karte SOM3 auf. In diesen selbstorganisierenden Karten SOM1,SOM2,SOM3 werden in Lernphasen entsprechende Betriebsparameter auf ihr normales Verhalten hin abgespeichert. Eine Vergleichseinheit VE überwacht anhand von aus den selbstorganisierenden Karten SOM1,SOM2, SOM3 gebildeten Überwachungsklassen UK1,UK2,UK3 den ordnungsgemäßen Betriebszustand der Anlage. Sollte dies nicht mehr übereinstimmen und eine Anomalie erkannt werden, so wird eine Meldung M ausgegeben.

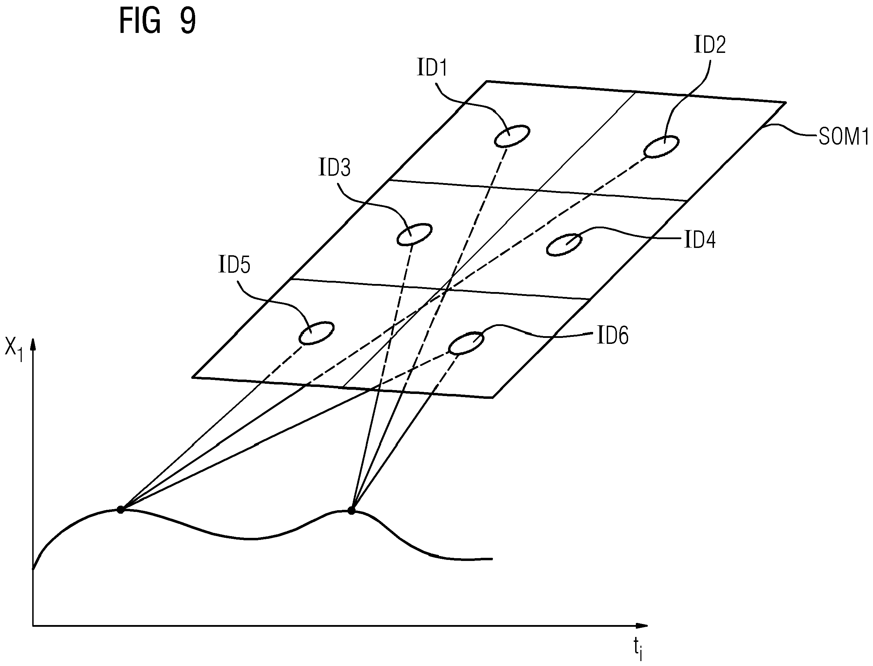

FIG 9 stellt beispielhaft die erste selbstorganisierende Karte SOM1 dar. Die Betriebsparameter werden in ihren Wert xᵢ und ihrem zeitlichen Verlauf tᵢ den Knoten ID1,...,ID6 der selbstorganisierenden Karte SOM1 zugeordnet.

## Patentansprüche

1. Verfahren zur Überwachung von Betriebsparametern (L,T,P) einer mittels eines Programms (P) programmgesteuerten industriellen Anlage (1) zur Ausführung eines kontinuierlichen Prozesses, wobei die Anlage (1) in einer Normalbetriebs-Phase (NP) betrieben wird, wobei in der Normalbetriebs-Phase (NP) zumindest ein einen ordnungsgemäßen Betriebszustand der Anlage (1) charakterisierender Parameter (OK) mittels einer ersten selbstorganisierenden Karte (SOM1) eine Anomalie-Erkennung durchgeführt wird, wobei
- der zumindest eine Parameter (OK) in einer Lernphase (LP) der ersten selbstorganisierenden Karte (SOM1) als Eingangsgrößenreiz zugeführt wird, wobei die erste selbstorganisierende Karte (SOM1) zur Speicherung von erlernten Informationen mehrere Knoten (ID1,...,ID6) aufweist, in einem Knoten (ID1,...,ID6) wird dann in der Normalbetriebs-Phase (NP) ein erlernter Wert (xᵢ) des Parameters (OK) abgespeichert,
- ein Toleranzbereich für den Parameter (OK) für jeden Knoten (ID1,...,ID6) bestimmt wird, und für eine aktuelle Überwachung der Parameter (OK) zyklisch erfasst wird,
- für die Anomalie-Erkennung der aktuell erfasste Parameter (OK) hinsichtlich seines Wertes (xᵢ) mit den Knoten (ID1,...,ID6) der ersten selbstorganisierenden Karte (SOM1) verglichen wird und mittels eines Abstandmaßes wird geprüft, ob der aktuell ermittelte Wert (xᵢ) innerhalb des Toleranzbereichs des jeweiligen korrespondierenden Knotens (ID1,...,ID6) liegt, und für den Fall, dass der Wert nicht in dem Toleranzbereich liegt wird zum Signalisieren, das die Anomalie-Erkennung eine Anomalie erkannt hat, eine Meldung (M) generiert,
**dadur chgekennzeichnet,** dass
zusätzlich ein Erkennungsschritt durchgeführt wird, in welchem die Anomalie-Erkennung vorübergehend deaktiviert wird und die erste selbstorganisierende Karte (SOM1) für eine Stationarität-Erkennung der Normalbetriebs-Phase (NP) genutzt wird, dabei wird
- eine Hochfahrdauer (H_{T}) der Anlage (1) in einer Hochfahr-Phase (HP) ermittelt,
- wobei die Hochfahrdauer (H_{T}) wie folgt ermittelt wird, auf Basis der ersten selbstorganisierenden Karte (SOM1) wird die erste selbstorganisierende Karte (SOM1) hinsichtlich der Treffer in ihren Knoten (ID1,...,ID6) ausgewertet, und wenn die aktuell erfassten Parameter (OK) andere Knoten (x,y,z) anregen als es in der Normalbetriebs-Phase (NP) der Fall ist, wird ein Zähler (Z) gestartet und wenn der aktuell erfasste Parameter (OK) wieder die erlernten Knoten (ID1,...,ID6) anregen wird der Zähler (Z) gestoppt.

2. Verfahren nach Anspruch 1, wobei
weiterhin ein zusätzlicher Lernschritt (LS) eingeführt wird,
- der Parameter (OK) wird in einer Hochfahr-Lernphase (HLP) einer zweiten selbstorganisierenden Karte (SOM2) zum Einlernen zugeführt,
es werden Überwachungsklassen (UK1, UK2) eingeführt,
- dabei wird eine erste Überwachungsklasse (UK1) durch die Überwachung der Hochfahr-Phase (HP) mit der zweiten selbstorganisierenden Karte (SOM2) gebildet
- und eine zweite Überwachungsklasse (UK2) wird durch die Überwachung der Normalbetriebs-Phase (NP) mit der ersten selbstorganisierenden Karte (SOM1) gebildet,
wobei die Überwachungsklassen (UK1, UK2) aktiviert und deaktiviert werden, wobei weiterhin
- durch eine Programmanweisung (PA) des Programms (P), welche den Beginn der Hochfahr-Phase (HP) kennzeichnet, die erste Überwachungsklasse (UK1) aktiviert und nach Ablauf der Zeitspanne der Hochfahrdauer (H_{T}) wieder deaktiviert wird, und es wird für die sich anschließende Normalbetriebs-Phase (NP) die zweite Überwachungsklasse (UK2) aktiviert.

3. Verfahren nach Anspruch 2, wobei zusätzlich der aktuell erfasste Parameter (OK) hinsichtlich eines Zeitpunktes (tᵢ) und seines Wertes (xᵢ) mit den Knoten (ID1,...,ID6) der ersten selbstorganisierenden Karte (SOM1) verglichen wird.

4. Verfahren nach einem der Ansprüche 1 bis 3, wobei
- ein Arbeitspunktwechsel wie folgt ermittelt wird, es wird ein einen Arbeitspunkt charakterisierender Sollwert (SW) abgefragt, mit dem Sollwert (SW) wird aus einer Kennlinie oder Tabelle der zugehörige Arbeitspunkt ermittelt, sollte der ermittelte Arbeitspunkt von dem derzeitig eingestellten Arbeitspunkt abweichen, so liegt ein Arbeitspunktwechsel vor,
- für eine sich daraus ergebende Arbeitspunktwechsel-Phase (AP), wird eine Wechseldauer (AP_{T}) wie folgt ermittelt,
- auf Basis der ersten selbstorganisierenden Karte (SOM1) wird für den aktuell erfassten Parameter (OK) geprüft, ob er außerhalb des Toleranzbereichs liegt, ist dies der Fall, wird ein Zähler (Z) gestartet und wenn der aktuell erfasste Parameter (OK) wieder im Toleranzbereich liegt wird der Zähler (Z) gestoppt,
weiterhin wird ein zusätzlicher weiterer Lernschritt (aLS) eingeführt
- der Parameter (OK) wird in einer Arbeitspunktwechsel-Lernphase (ALP) einer dritten selbstorganisierenden Karte (SOM3) zum Einlernen zugeführt,
- und es wird eine dritte Überwachungsklasse (UK3) durch die Überwachung der Arbeitspunktwechsel-Phase (AP) mit der dritten selbstorganisierenden Karte (SOM3) gebildet,
- es wird anhand des geänderten Sollwertes (SW) der Arbeitspunkwechsel erkannt und durch eine Programmanweisung, wird dann die dritte Überwachungsklasse (UK3) aktiviert und nach Ablauf der Zeitspanne der Wechseldauer (AP_{T}) wieder deaktiviert, und es wird für die sich anschließende Normalbetriebs-Phase (NP) wieder die zweite Überwachungsklasse (UK2) aktiviert.

5. Verfahren nach einem der Ansprüche 1 bis 4, wobei das Programm (P) als ein Schrittkettenprogramm (SK) ausgeführt wird und der Beginn der einer Normalbetriebs-Phase (NP) durch einen das Ende der Hochfahr-Phase (HP) kennzeichnenden Schritt eingeleitet wird.

6. Verfahren nach einem der Ansprüche 1 bis 5, wobei zusätzliche Schwankungen, wie sie sich durch das Einleiten der Arbeitspunktwechsel-Phase (AP) oder der Hochfahr-Phase (HP) im zeitlichen Verlauf des Parameters (OK) ergeben, weiterhin dadurch festgestellt werden, dass die erste selbstorganisierende Karte (SOM1) hinsichtlich der Treffer in ihren Knoten (ID1,...,ID6) ausgewertet wird, in dem festgestellt wird, dass die aktuell erfassten Parameter (OK) andere Knoten (x,y,z) anregen als es in der Normalbetriebs-Phase (NP) der Fall ist.
